# EUROPEAN PATENT APPLICATION

(11) **EP 2 065 346 A1**
(43) Date of publication of application: **03.06.2009**
(21) Application number: 07301612.3
(22) Date of filing: 30.11.2007
(51) Int. Cl.: C03C 3/062, C03C 3/078, C03C 3/085, C03C 10/00

(54) **High thermal conductivity cordierite glass-ceramic materials**

(71) Applicant: Corning Incorporated, Corning NY 14831 (US)
(72) Inventor: Dannoux, Thierry, 77210 Avon (FR); Wondraczek, Lothar, 77250 Veneux les Sablons (FR)
(74) Representative: Le Roux, Martine

(57) **Abstract**

Disclosed is glass-ceramic material that contains cordierite as the predominant crystal phase and is comprised SiO₂-Al₂O₃-MgO precursor base glass. The glass ceramic material exhibits the following desirable properties: (1) a linear coefficient of thermal expansion (CTE) over the temperature range 0-300°C of less than 50x 10⁻⁷/° C; and, (2) a thermal conductivity greater than about 2.5 W/(mK). The cordierite glass ceramic of the present invention is comprised, in weight percent on the oxide basis, of the following:
39-60% SiO₂, 15-35% Al₂O₃, with the SiO₂/Al₂O₃ ratio in weight being either between 1.31 to 1.40 or 1.54 to 2.86;
5-17% MgO, 4-12% TiO₂, 0-5% SnO, 0-4% MnO, 0-5% FeO, 0-5% CeO₂, with the combination of MgO+SnO+MnO+FeO+CuO+CeO₂ being 14-25%;
0-4% BaO, 0-5% SrO, 0-5 ZnO, with the combination of CeO2+BaO+SrO+SnO+ 2(MnO+CuO+FeO)+ZnO being 2-20% if the SiO₂/Al₂O₃ ratio is between 1.54 to 2.86 or 4-20% if the SiO₂/Al₂O₃ ratio is between 1.31 to 1.40.
The glass-ceramic of the present disclosure is capable of being formed in sheet articles exhibiting fine surface or microstructures features.

## Description

### BACKGROUND

### Field of the Disclosure

The present invention relates to a glass ceramic material exhibiting high thermal conductivity having cordierite as the predominate crystal phase and more particularly, to glass ceramic articles made of the high thermal conductivity cordierite-containing material, such as thermoelectric device substrates, microreactors and article supports/handling devices for use in optical lithography.

### Technical Background

Known in the art are various types of cordierite glass-ceramics obtained by melting and subjecting to a heating treatment a base glass of a SiO₂--Al₂O₃--MgO system including a nucleating agent. These glass-ceramics generally contain a cordierite crystal phase (Mg₂Al₄Si₅O₁₈) as the predominant crystal phase.

US Pat. No. 4304603 (Grossman et al.) describes a cordierite phase-containing glass-ceramic suitable for the fabrication of radomes with porous surface layers having a depth of about 0.005"-0.015". Disclosed properties for this glass-ceramic included a loss tangent at 25° C. and 8.6×10⁹ Hz of no greater than about 0.00035; (2) a dielectric constant at 25° C. and 8.6×10⁹ Hz of no more than about 6; (3) a modulus of rupture after fortification in excess of 30,000 psi; and (4) a coefficient of thermal expansion (25°-300° C) of less than about 45×10⁻⁷/°C. Cordierite constitutes the predominant crystal phase for this glass-ceramic, however other crystal phases may be present, in minor amounts, including cristobalite, magnesium-aluminium titanate, and rutile. Lastly, this reference discloses that the glass-ceramic exhibits an overall composition consisting essentially, expressed in weight percent on the oxide basis, of about 15-18% MgO, 21-25% Al₂O₃, 48-53% SiO₂, 9.5-11.5% TiO₂, and 0-1% As₂O₃.

US Pat. No. 5532194 (Kawashima et al.) describes another glass-ceramic having a cordierite crystal phase as the predominant crystal phase. This glass-ceramic is comprised of a composition consisting in weight percent of: 38-50% SiO₂, 18-30% Al₂O₃, 10-20% MgO with the ratio in weight of Al₂O₃ to MgO being 1.2 to 2.3. Other constituents of this glass-ceramic include 0-5% B₂O₃, 0-5% CaO, 0-5% BaO, 0-5% SrO, 0.5-7.5% ZnO, 4-15% TiO₂ 0-5% ZrO₂ and As₂O₃ + 0-2% Sb₂O₃. In addition to the major cordierite crystal phase, these glass-ceramic materials exhibited certain minor phases such as enstatite and β-quartz solid solution. The glass-ceramic materials disclosed herein exhibited high resistivity to heat and impact and are suitable for as materials requiring a fine/precision processing (surface roughness of 5 to 50Å) such, for example, as electronics parts, magnetic disk substrates and machine parts.

Glass-ceramic materials with higher Young's modulus, higher strength and higher heat/impact resistance, superior surface smoothness, homogeneity and processability have been disclosed in US Pat. No. 6905988 (Zou). These crystallized glass (or glass-ceramic) materials, particularly suitable for use as information recording medium substrates, exhibit a predominate crystal phase comprising enstatite or its solid solution. Furthermore, these glass materials are comprised of a composition, expressed in mole percent, of 35-65 % of SiO₂, 5-25% of Al₂O₃, 10-40 % of MgO and 5-15 % of TiO₂, in which the total amount of aforementioned composition is at least equal to or higher than 92 mol %.

These prior art cordierite and enstatite glass-ceramics are all capable of being surface-processed to some degree, however there remains a need low thermal expansion, high thermal conductivity substrate sheet materials that can be processed to exhibit fine surface or microstructures features.

### SUMMARY

One aspect of the invention described herein relates to a glass-ceramic material suitable for the fabrication of microstructured articles. The glass-ceramic material contains cordierite as the predominant crystal phase and is comprised of a SiO₂-Al₂O₃-MgO precursor base glass. The cordierite glass ceramic of the present invention is comprised, in weight percent on the oxide basis, of the following:
39-60% SiO₂, 15-35% Al₂O₃, with the SiO₂/Al₂O₃ ratio in weight being either between 1.31 to 1.40 or 1.54 to 2.86;
5-17% MgO, 4-12% TiO₂, 0-5% SnO, 0-4% MnO, 0-5% FeO, 0-X% CuO, 0-5% CeO₂, with the combination of MgO+SnO+MnO+FeO+CuO+CeO₂ being 14-25%; 0-4% BaO, 0-5% SrO, 0-5 ZnO, with the combination of CeO2+BaO+SrO+ SnO+ 2(MnO+CuO+FeO)+ZnO being 2-20% if the SiO₂/Al₂O₃ ratio is between 1.54 to 2.86 or 4-20% if the SiO₂/Al₂O₃ ratio is between 1.31 to 1.40.

The glass ceramic material exhibits the following desirable properties
a linear coefficient of thermal expansion (CTE) over the temperature range 0-300°C of less than 50× 10⁻⁷/° C; and,
a thermal conductivity greater than about 2.5 W/(mK).

Another aspect of the invention provides for microstructured glass ceramic articles which comprised of aforementioned cordierite-containing glass-ceramic. High quality microstructured substrates can be produced by conventional roller embossing techniques, as well as by adapted roller embossing techniques using graphite molds. Microstructured glass-ceramic articles exhibiting surface features such as channels exhibiting widths between about 0.2 mm and 20.0 mm and depth between about 0.1 mm and 3.0 mm, can be achieved by utilizing the composition and methods disclosed. Such microstructured substrates can advantageously be used as substrates in thermoelectric devices, as parts of microfluidic/microreactor devices or heat exchangers, and as article supports/handling devices for use in optical lithography devices.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description, serve to explain the principles and operations of the invention.

### BRIEF DESCRIPTION OF THE DRAWINGS

FIG. 1 schematically illustrates a roller embossing technique that is preferably used to create microstructures in the precursor glass, according to the present invention; and,

FIG. 2A-2C are photographs of a graphite mold, microstructured precursor glass article, and of a microstructured glass ceramic article, respectively, all according to the present invention.

### DETAILED DESCRIPTION

The glass-ceramic material disclosed herein is comprised of a SiO₂-Al₂O₃-MgO precursor base glass. As essential compounds, the SiO₂, MgO and Al₂O₃ must be present in amounts that assure the formation of cordierite (Al₃Mg₂AlSi₅O₁₈) phases. However, a trade-off exists between melting temperature, glass formation ability and devitrification, and nearness to cordierite stoichiometry (Al₃Mg₂AlSi₅O₁₈). While in the ideal case, a stoichiometric cordierite melt (i.e., typically, depending on TiO₂-content, comprising, in weight percent of about 30-34% Al₂O₃, 12-13.5% MgO and 45-50% SiO₂,) might yield low coefficient of thermal expansion and highest thermal conductivity, practically such melts are very difficult to process because often, they spontaneously devitrify and/or crystallize during cooling. For glasses that are comparably easy to control and that can be formed into sheet having microstructured features (as a result of rolling/embossing) without devitrification, the inventors have discovered that it is necessary to deviate from stoichiometry. This results in a broadening of the acceptable amounts of SiO₂, Al₂O₃ and MgO, and as such, in the instant embodiment, the cordierite glass ceramic of the present invention are comprised, in weight percent on the oxide basis, of 39-60% SiO₂ and 15-35% Al₂O₃ and 5-17% MgO.

Regarding the SiO₂ component, it should be noted that it forms the network structure of glass, and, in addition, is a very important ingredient for producing a cordierite (Mg₂Al₄Si₅O₁₈) crystal as the predominant crystal phase by heat treating the precursor glass.
If the amount of this ingredient is below 39%, the crystal growing in the glass-ceramic is instable whereas if the amount exceeds 60%, melting of the base glass becomes difficult. Furthermore, SiO₂ which exceeds the 60% value will likely result in the occurrence of unpreferably high amounts of secondary crystalline phases, e.g. α-quartz, β-cristoballite or others, that may significantly and undesirably increase the coefficient of thermal expansion. A preferable range of this ingredient has been found to be 39% to 57%.

As for the Al₂O₃ constituent it also is a very important ingredient for producing the cordierite crystal by heat treating the base glass. If the amount of this ingredient is below 15%, growing of the cordierite crystal is difficult and melting of the base glass becomes also difficult. If the amount of this ingredient exceeds 35%, melting of the base glass becomes also difficult and the stability against devitrification deteriorates. Furthermore, the formation of secondary phases such as mullite may occur to an undesirably high extent, leading to an increase in the coefficient of thermal expansion. A particularly preferable range of this ingredient is 17% to 35%.

Lastly, the MgO ingredient functions as a glass modifying ingredient and is also a very important ingredient for producing the cordierite crystal as the predominant crystal phase. If the amount of this ingredient is below 5%, growing of the cordierite crystal becomes difficult and melting of the base glass becomes also difficult. If the amount of this ingredient exceeds 17%, melting of the base glass becomes difficult and the stability against devitrification deteriorates to an unacceptable level. Also, levels of MgO in excess of the 17% level likely result in the formation of secondary crystalline phases such as spinel in undesirably high amounts, leading to undesirable increases in the coefficient of thermal expansion. A preferable range of this ingredient is 5% to 15%.

As described above, a deviation from stoichiometry enables the formation of the desired glasses that can be transformed via a process of internal nucleation and subsequent crystallization into a ceramic material exhibiting the desirable properties of a linear coefficient of thermal expansion (CTE) over the temperature range 0-300°C of less than 50×10⁻⁷/° C; and, a thermal conductivity greater than about 2.5 W/(mK). In another embodiment, a CTE of less than 15×10⁻⁷/° C can be achieved. The inventors discovered that by varying the amounts of Al₂O₃ and SiO₂ away from their stoichiometric amount (i.e., a weight percent ratio of SiO₂ to Al₂O₃ of 1.47), these glass ceramic materials can be achieved. Specifically, it was discovered that in order to achieve these low CTE, high thermal conductivity glass-ceramic materials, the SiO₂/Al₂O₃ ratio (as measured in batch composition) must deviate from stoichiometric at least by 0.07, i.e. a SiO₂/Al₂O₃ larger than about 1.54 or smaller than about 1.40. However, if the ratio exceeds a maximum value at which the SiO₂ becomes too large at the expense of Al₂O₃, and thus cordierite crystal formation does not sufficiently occur to produce the cordierite phase; this upper limit was determined to be about 2.86. On the other hand, it becomes difficult to generate glasses when the amount of SiO₂ decreases below a certain level (when compared to the Al₂O₃ level); this lower ratio limit was determined to be about 1.31. As such the acceptable SiO₂/Al₂O₃ ratio ranges (as measured in batch composition) were determined to be as follows: either between about 1.31 to 1.40 or about 1.54 to 2.86.

Other essential constituents which are necessary to include in the precursor glass (and ultimately the glass ceramic) include the following, as listed in weight percent:
- 4-12% TiO2, 0-5% SnO, 0-4% MnO, 0-5% FeO, 0-X% CuO, 0-5% Ce02, with the combination of MgO+SnO+MnO+FeO+CuO+CeO2 being 14-25%;;
- 0-4% BaO, 0-5% SrO, 0-5 ZnO, with the combination of CeO2+BaO+SrO+ SnO+ 2(MnO+CuO+FeO)+ZnO being 2-20% if the SiO₂/Al₂O₃ ratio is between 1.54 to 2.86 or 4-20% if the SiO₂/Al₂O₃ ratio is between 1.31 to 1.

The TiO₂ ingredient is indispensable as the nucleating agent. If the amount of this ingredient is below 4%, a desired crystal cannot be obtained whereas if the amount of this ingredient exceeds 12%, the property against devitrification is deteriorated. A particularly preferable range of this ingredient is 5% to 9%.

The inclusion of at least one of CeO₂, BaO, SrO, SnO, MnO, CuO, FeO and/or ZnO is necessary to help to stabilize the glass, particularly for relatively low SiO₂-contents; specifically, they help to prevent devitrification and uncontrolled crystallization.
Furthermore, the inclusion of these constituents also helps to optimize the viscosity behavior at high temperature and they thus enable the possibility of microstructuring directly after melting. At the lower end of the SiO₂/Al₂O₃ratio (i.e., ratio between 1.31 to 1.40), the presence of these constituents further has the following additional functions:
- significantly facilitating the crystallization process which results in improved mechanical strength as a result of reduced inner stresses and improved surface quality after ceramming by affecting amount and viscosity of the residual glass phase in the glass ceramic; and,
- enabling lower coefficients of thermal expansion of the final glass ceramic when they are incorporated into the crystalline structure of the cordierite phase. For compositions at the lower end of the SiO₂/Al₂O₃ ratio (again, a ratio between 1.31 to 1.40) at least 4 wt.% in total of the combination of CeO₂+BaO+SrO+SnO+ 2(MnO+CuO+FeO)+ZnO must be present. If the aforementioned combination is present in amount less than 4%, controlled cerammization can not be achieved for larger sample sizes.

Additionally, as to which constituents should be included, and in what concentrations, the inventors surmised that the mix/amount of these constituents should be such that a minimum amount of soft residual glass phase is present during the crystallization process to absorb these stresses, resulting in a minimization of inner stresses that potentially may develop during the crystallization process as a result of dimensional changes at the microstructural scale. On the other hand, if the amount of residual glass phase is too high, the coefficient of thermal expansion may increase to values above 50x10⁻⁷/°C

In addition to the above described constituents, the glass may additionally include rare earth oxides such as Y₂O₃, Gd₂O₃, La₂O₃, or also Ta₂O₅, in amounts up to 8 wt.%. The inclusion of these optional constituents will typically result in the formation of additional minor crystalline phases such as disilicates. The inclusion of these minor phases can be done so as means for increasing the mechanical strength of the glass ceramic, or to modify the glass-ceramic's coefficient of thermal expansion.

The glass batch may optionally contain at least one reducing agent which functions to shift the equilibria of specific redox pairs towards the preferred lower oxidation state: particularly Sn²⁺/Sn⁴⁺; Fe²⁺/Fe³⁺, Mn²⁺/Mn³⁺/Mn⁴⁺. Possible reducing agents comprise coke, starch, sugar or other sources of carbon that will reduce the oxygen content of the glass melt in, at elevated temperature, reacting with the melt and forming gaseous CO or CO₂ that will leave the melt. As an alternative, sulfides, particularly ZnS, may be employed, that will react with the melt and generate SO₂/SO₃ gas. In total, the amount of reducing agents that are used in the batch must not exceed 2 wt.% in order to maintain the Ti³⁺/Ti⁴⁺ equilibrium sufficiently on the Ti⁴⁺ side so that during the process of transformation to a glass ceramic, internal nucleation via TiO₂ can occur effectively.

It should be noted that variations of the composition of said glass ceramic can result in reductions of the coefficient of thermal expansion, to values generally lower than 50x10⁻⁷/°C. In certain embodiments glass-ceramic articles can be can be tuned to exhibit CTE lower values;
- in one embodiment glass-ceramic articles having a CTE over the temperature range 0°-300°C of less than about 15×10⁻⁷/°C 12;
- in a second embodiment glass-ceramic articles having a CTE over the temperature range 0°-300°C of between about 22-40 ×10⁻⁷/°C.
- in a third embodiment, the coefficient of thermal expansion can be adjusted to lie
   within the range of 22x10⁻⁷/°C to 30x10⁻⁷/°C, matching that of metallic silicon Adjustment of the composition to modify the CTE can be achieved while not negatively affecting other physical properties such as mechanical strength and/or Young's modulus, and while maintaining a thermal conductivity of greater than 2.5 W/(mK). The possibility to obtain a generally low coefficient of thermal expansion coupled with the ability to specifically tune it by changing the chemical composition of the glass ceramic within a given range is highly advantageous for applications that require high geometrical stability, high resistance against thermal shock, and where a substrate material such as the object of the present invention needs to be joined with another material, e.g. a thermoelectric material, metallic silicon, or another ultra-low-expansion material such as the glass ULE^{™} (Coming, Inc.) or the glass ceramic Keralite^{™} (Eurokera, France).

In order to obtain high-quality, bubble-free glass, it is preferred that the batch contains at least one fining agent such as nitrates, sulfates, SnO₂ or CeO₂. It should be noted that the aforementioned reducing agent, may, in addition to its primary reducing function, function as a fining agent, as well, based on its reaction with the glass batch which may result in the formation of a fining gas.

In a preferred embodiment the precursor glass (and the starting batch) includes tin oxide, expressed as SnO, with the preferred composition comprising, in weight percent, the following:
39-57% SiO₂
17-35% Al₂O₃, with the SiO₂/Al₂O₃ ratio in weight being either between 1.31 to 1.40 or 1.54 to 2.86
5-15% MgO
4-20% SnO
14-25% MgO+SnO
5-9% TiO₂
The sum of those above preferred elements should comprise is at least 92% ,by weight of the total mixture (more preferably 95, by weight), with remaining constituents being selected from those optional constituents described above

For the production of the precursor glass of the composition described above, a glass batch of the appropriate composition can be melted in either a continuous or discontinuous furnace at temperatures ranging between 1500°C and 1680 °C, depending on composition. Higher melting temperatures can be used, but energy costs and potential evaporation of certain elements of the batch make it undesirable to melt at temperatures above 1680 °C.

Once the glass article of the above described composition has been melted, microstructures or surface features will need to be formed into/imparted onto the surface of the glass article. The inventors contemplate that the melted glass batch, prior to cooling, can be directly processed into a microstructured article; i.e., mix batch, melt batch and form into microstructured article. Although not preferred, microstructuring can also be performed "ex situ"; i.e. by re-heating a previously generated glass plate/article to temperature above its liquidus temperature, and thereafter embossing the desired microstructures/features into the re-melted glass article.

In particular, it is essential that surface microstructures/features exhibiting dimensions on the order of tens of micrometers to millimeters be imparted to the glass article and that those microstructure/ features remain after the process of transformation to a glass ceramic. There are numerous techniques known to those skilled in the art which can be utilized to impart fine features or microstructures into the glass article. The inventors have discovered that one technique capable of imparting microstructures of high quality into a glass article involves roller embossing of the melted glass article/batch.

Additionally the inventors contemplate that high quality microstructured substrates can be produced by conventional roller embossing techniques, as well as by adapted roller embossing techniques using graphite molds like those disclosed in European Patent Application Nos. 07300835, Method for Making Microfluidic Devices and Devices Produced Microstructured glass-ceramic articles according to invention include surface features such as straight channels exhibiting a width between about 0.2 mm and 20.0 mm, and a depth between about 0.1 mm and 3.0 mm. In another embodiment those channels exhibit an angle between bottom of the article and the walls of the channels is between about 80° and 100°. In other embodiments the microstructured features can be channels which exhibit a bent or circular shape. In still another embodiment the glass-ceramic articles can include surface microstructures such as a plurality of channels that are not connected. Lastly, the inventors contemplate microstructures such as holes or slits that are aligned perpendicular to the glass ceramic article microstructured surface.

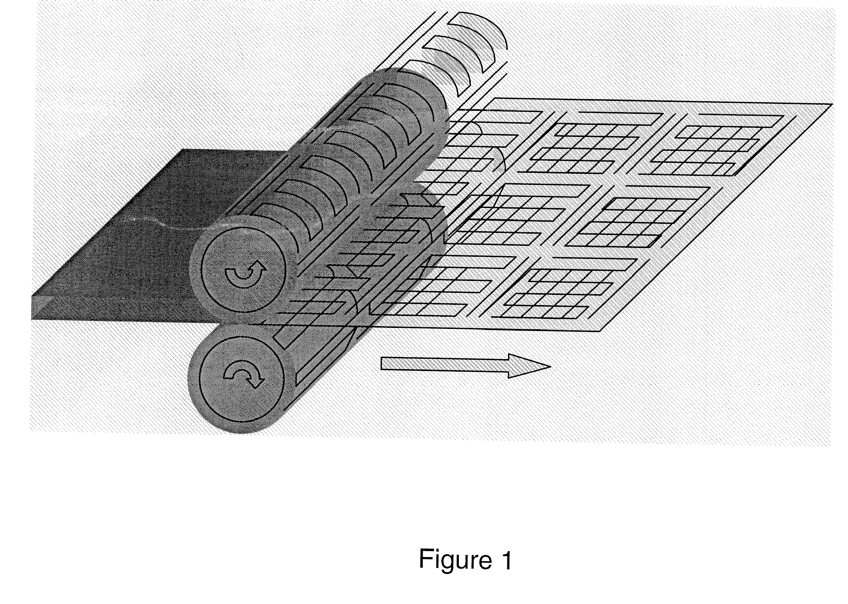

Referring to FIG. 1 illustrated therein is a schematic of the roller embossing process. After melting (either a batch melt or the already formed re-melted glass article), the melted glass is formed (or re-formed), preferably into sheet, by a rolling process. Microstructures (for instance channels) can be embossed directly during forming, using either a microstructured roller (as illustrated in FIG. 1), or alternatively a microstructured substrate/mold onto which the glass is rolled (not shown). In order to achieve the above surface microstructure/features, it is crucial that the glass is designed to exhibit a viscosity behavior that opens a processing window at temperatures below the maximum use temperatures of the employed forming tools, and, secondly, that no devitrification or uncontrolled crystallization occurs during forming. It should be noted that the glass composition described above achieves these two requirements.

Other processing and mold/roller requirements/conditions which must be met in order to achieve the microstructure features of the present disclosure include:
- Operating at a glass viscosity which allows the hot glass to enter every mould channel under the pressure that is applied via the roller, without front glass overcooling that may prevent embossing of fine features.
- Use of a mold material capable of preventing any material sticking at this viscosity.
- Use of a porous mould material capable of preventing any gas being trapped between glass and mold.
- Preheat the mold and/or roller to a temperature that lies between the glass transformation temperature of the employed glass, and the temperature at which the glass melt is delivered.

Taking into account the aforementioned surface microstructuring/feature description and requirements/conditions, following is one detailed embodiment for forming the surface microstructures/features. Generally, molten glass from a SiO₂ crucible heated to 1650°C in the form of a glass gob is delivered onto a pre-heated graphite mould; preheating of graphite moulds to at least 500 °C, and preferably 800°C, is critical to ensure effective generation of microstructures. Initially, the molten glass gob (still at a temperature of about 1400°C to 1500°C) contacts the heated/receiving graphite plate and is thereafter progressively forced by a 100 kg metallic roller onto the graphite mold. Other potential roller materials, e.g. ceramics, are known to the those skilled in the art. As the roller is rolled over the gob it flattens the gob into a sheet with the side of the gob/sheet opposite the roller being forced into the microstructures patterned into the mold while the side of the gob/sheet which contacts the roller is subject to cooling. Once the gob is fully rolled into a sheet and the microstructures are formed in the molded side of the glass sheet, the rolled glass article is cooled for 15 seconds until it reaches a temperature of about 850°C; the cooled glass article is then transferred to preheated oven for annealing (1 hour at 700°C), followed by cooling at about 2 °C/min to room temperature.

Regarding the graphite material suitable for use as the mold material, it should be of such a grade it exhibits a thermal expansion coefficient of 25x10⁻⁷/°C, and exhibits ∼5% open porosity; this porosity level is necessary so to achieve the avoidance of gas entrapment in the mold.

Once the glass articles are surface processed via roller embossing or other techniques to exhibit the microstructure surface features, the so-formed glass article will need to be heat-treated to transform the glass article into a glass-ceramic material article exhibiting the cordierite crystal phase as the predominate crystal phase. As is known for bulk cordierite glass-ceramics, in general, this transformation is accomplished via internal nucleation (as a result of the presence of TiO₂ as a nucleating agent) during a heat treatment at elevated temperature, followed by crystallization of the sample at a second, even higher temperature for a given time.

A couple of criteria unique to the ceramming/crystallization of the microstructured articles of the present invention are as follows: (1) the so-formed microstructured features formed in the glass article surface must be maintained in the glass ceramic article surface; (2) the glass-ceramic must be subject to minimal warp or other type of deformation during the ceramming or crystallization process; and (3) the so-formed glass-ceramic article must possess a high surface quality (i.e., nucleation must occur in the bulk rather than at the surface so as to avoid surface cracking)

Acceptable deformation, over the whole sample size, must not exceed one fifth of the minimal structure depth. For example, if channels of 1 mm depth were embossed in the glass sheet, it follows that deformation during ceramming (i.e., warp) must not exceed 0.2 mm. As long as deformation lies below this maximum value, it can be compensated via a post ceramming step such as polishing without loosing the essential functionality of the embossed microstructure; i.e. not more than 20 % of the channel depth will be lost when flatness is reconstructed via polishing.

To achieve the above criteria/objectives in the ceramming process, a suitable ceramming process must be combined with the right composition. It was found that in the considered compositions, the nucleation treatment may generally be performed in the temperature interval between 770°C and 890 °C. For practical reasons, the time of the nucleation treatment should not exceed 10 hours. Usually, 1-3 hours ensure sufficient nucleation. After nucleation, the temperature is further increased. In the present case, we found that the desired physical properties can be achieved when the crystallization treatment is performed in the temperature interval between 1000°C and not more than 1270 °C. Preferably, crystallization should be performed between 1120°C and 1230°C. In this case, high thermal conductivity, acceptable CTE, surface quality and the requisite mechanical properties can be achieved. As with the nucleation treatment, the time for crystallization is limited for practical reasons, and should preferably lie between 30 min and 3 h.

Besides the aforementioned recommended thermal treatment times and temperatures, heating and cooling rates are important to minimize warp. The following conditions should be considered:
- preferably, after the crystallization treatment the temperature is lowered in a first step to below 1120 °C not slower than 10 °C/min, more preferably not slower than 15 °C/min to 1050°C and subsequently, the cooling rate down to 700 °C is preferably is not higher than 3 °C/min
- the heating rate between nucleation and crystallization treatment is preferably not higher than 20 °C/min, and not lower than 2 °C/min.

Microstructured glass-ceramic articles formed according to the descriptions above which exhibit a high quality surface (no detectable cracks) with highly dedicated microstructures/features (of a dimension on the order of tens of micrometers to millimeters) and which possess the property combination of low CTE, less than 50×10⁻⁷/°C, and high thermal conductivity, greater than about 2.5 W/(mK) will find uses in different application not typically found for glass-ceramic materials. Such microstructured substrates can advantageously be used as substrates in thermoelectric devices, as parts of microfluidic/microreactor devices or heat exchangers, and as article supports/handling devices for use in optical lithography devices. More specifically, because of the high thermal conductivity exhibited by these inventive cordierite microstructured articles, typically about 2x or higher than that of any other glass, and most known glass ceramic materials, these articles may enable significantly increased performance in applications ranging from thermoelectric related products (e.g., electrode plate material for thermoelectric devices) to heat exchangers. Additionally, as a result of combination of the elevated thermal conductivity, the potentially low production cost, the low CTE and improved heat transfer in highly exothermic chemical reactions these cordierite microstructured articles will provide an alternative and improved substrate material for microfluidic/microreactor devices. Lastly, a these cordierite microstructured articles which are capable of exhibiting low CTE at ambient temperature, elevated conductivity, and which are capable being surface processed to exhibit microstructure features are suitable materials for use as lithography wafer tables exhibiting fine dimensioned inner channels having channel diameters as small as a 0.1 mm and ranging in size to > 1 mm.

### EXAMPLES

Examples of the cordierite glass-ceramic according to the invention will now be described; however, the present invention is not limited to these examples.

### Examples 1-12

Table I includes details of the cordierite glass-ceramic according to the invention; the glass compositions of Examples 1 to 12 are listed with respect to % by weight. The compositions shown in Tables I are those of the precursor glass material. However, as the results of analysis on the glass-ceramic material of Examples 1 to 12, the compositional difference between the starting material and the crystallized glass is within ±0.1%. Thus, the compositions of the starting materials (and the precursor glass formed) shown for Examples 1 to 12 are substantially identical with these of the crystallized glasses. As the starting materials of these glasses, SiO₂, Al₂O₃, Al(OH)₃, MgO, TiO₂, and the like were weighed into portions according to the given compositions shown for Examples 1 to 12 and mixed sufficiently to provide formulated batches; each batch formulated was sufficient to produce a 1 kg glass melt.

Each of the batches were melted on a laboratory scale by placing the batch in a 11 silica crucible which was then placed in a furnace for 3 hours at 1650 °C, to thereby produce the 1 kg of glass. To generate a glass plate for further processing, the glass melts were poured onto a preheated steel table (500°C) and rolled into sheet of 4 mm thickness and thereafter cooled to the glass transition temperature, immediately transferred into an annealing furnace, annealed at a temperature of 700 °C for about 1 hour and left to cool to room temperature in the furnace at a cooling rate of about 2 °C/min. After cooling, glass samples having a size of about 400 mm × 200 mm × 4 mm were cut into pieces having a size of about 100 mm × 100 mm× 4 mm, they were put in a heat treatment furnace and cerammed according to one of the following ceramming cycles (refer to Table I to see which ceramming cycle was utilized for each of the Example): .
- Ceram Cycle 1: ramp to 850 °C in 2hrs; dwell 1hr; ramp to 1150 °C in 1hr.; dwell 1hr; ramp to Room Temp. in 10hrs.
- Ceram Cycle 2: ramp to 600 °C in 1hr; ramp to 850 °C in 2hrs; dwell 1hr.; ramp to 1150 °C in 2hrs.; dwell 1h; ramp to 1050 °C in 5 min; ramp to Room Temp. in 8hrs.
- Ceram Cycle 3: ramp to 600 °C in 1hr.; ramp to 850 °C in 2hrs.; dwell 2hr.; ramp to 1150 °C in 1hr.; dwell 1hr.; ramp to 1050 °C in 5 min; ramp to Room Temp. in 10hrs.

Following cooling to room temperature the so-formed glass-ceramic samples were further cut and polished to form samples for measuring the following properties: coefficient of thermal expansion, thermal conductivity, Young's modulus and modulus of rupture. For measuring the coefficient of thermal expansion, test pieces were cut off from the crystallized glass after crystallization, subjected to polishing process as to form a column shape of 4 mm x 4 mm × 20 mm, then they were used as samples for thermomechanical analyses (TMA) measurement. The measurement conditions were set as the elevating speed of temperature was 2 K/min. and the maximum temperature was 220° C. ring-on-ring technique on polished sample disks, 32 mm in diameter and 3 mm thick). The modulus of rupture (MOR) was determined by the "ring-on-ring" technique, using disks of diameter 32 mm with a thickness of 3 mm that were cut from the crystallized glass and subsequently polished on both sides. The same disks were used to determine Young's modulus by measuring the speed of ultrasonic wave propagation through the sample. Finally, thermal conductivity was measured by the contact-method, again employing the same type of sample disks. All those measuring techniques are known to the expert in the field. The data obtained by the measurements are listed for each of the glass/glass-ceramic compositions of Examples 1 to 12.

**TABLE I**

| | Example No. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| SiO₂ | 43.0 | 56.4 | 55.3 | 55.7 | 55.4 | 55.8 | 44.5 | 47.1 | 50.9 | 48.2 | 40.2 | 55.6 |
| Al₂O₃ | 31.6 | 19.9 | 19.5 | 19.7 | 19.5 | 19.7 | 32.8 | 29.0 | 25.0 | 26.8 | 29.5 | 19.6 |
| *SiO₂*/*A*/*₂O₃* | 1.36 | 2.83 | 2.84 | 2.83 | 2.84 | 2.83 | 1.36 | 1.62 | 2.04 | 1.80 | 1.36 | 2.83 |
| MgO | 11.1 | 14.8 | 12.0 | 13.3 | 12.6 | 13.4 | 12.2 | 12.2 | 12.2 | 13.1 | 5.3 | 13.9 |
| TiO₂ | 4.8 | 8.9 | 8.7 | 8.8 | 8.7 | 8.8 | 4.8 | 6.0 | 6.0 | 6.8 | 7.4 | 8.8 |
| SnO | 9.5 | - | - | - | - | - | 5.9 | 5.9 | 5.9 | 5.2 | 17.7 | 2.1 |
| FeO | - | - | - | - | - | 2.3 | - | - | - | - | - | - |
| CeO₂ | - | 4.0 | - | - | - | | - | - | - | - | - | - |
| MnO | - | - | 4.5 | - | - | | - | - | - | - | - | - |
| CuO | - | - | - | 2.5 | 3.8 | | - | - | - | - | - | - |
| | | | | | | | | | | | | |
| Ceramming cycle | 2 | 2 | 2 | 2 | 2 | 1 | 2 | 2 | 2 | 3 | 3 | 2 |
| surface quality* | good | good | good | good | good | good | good | good | good | good | good | good |
| Deformation^{**} | good | good | good | good | good | good | good | good | good | good | good | good |
| Λ (W/(mK)) | 2.95 | 3.30 | 3.29 | 3.21 | 2.97 | 3.12 | | | | | | |
| E (GPa) | 85 | | | 115 | 110 | 135 | | | | | | 120 |
| CTE (x10⁻⁷/° C) at 25 °C | 4 | | 20 | 26 | 28 | 19 | -7 | -10 | - 6 | 1 | 10 | 28 |
| CTE (x10⁻⁷/° C) at 200 °C | 16 | | 33 | 40 | 40 | 50 | 7 | 2 | 4 | 13 | 25 | 46 |
| MOR (MPa) | 52 ± 8 | 154 ±15 | 175 ±15 | 127 ±15 | 75± 15 | 234 ± 15 | | | | | 159 ±15 | 142 ±15 |

| | | | | | | | | | | | | |
|---|---|---|---|---|---|---|---|---|---|---|---|---|
| ^{*} good means no visible signs of surface cracks or pronounced local deformation/glazing ^{**} good means less than 1 mm maximum warp for a sample of about 4 mm thickness and about 10 x 10 cm size | | | | | | | | | | | | |

### Example 13

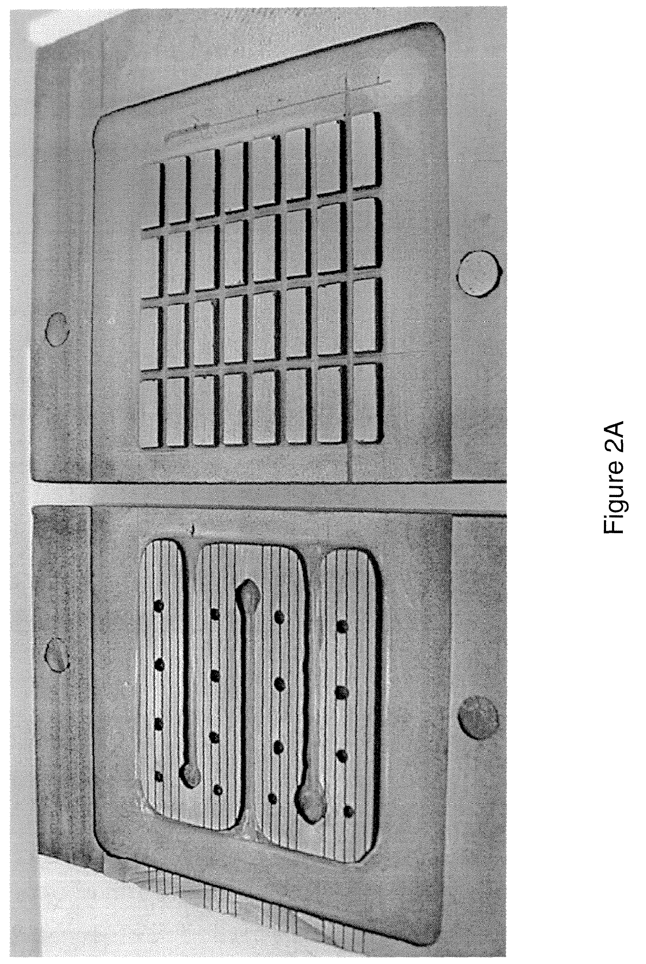

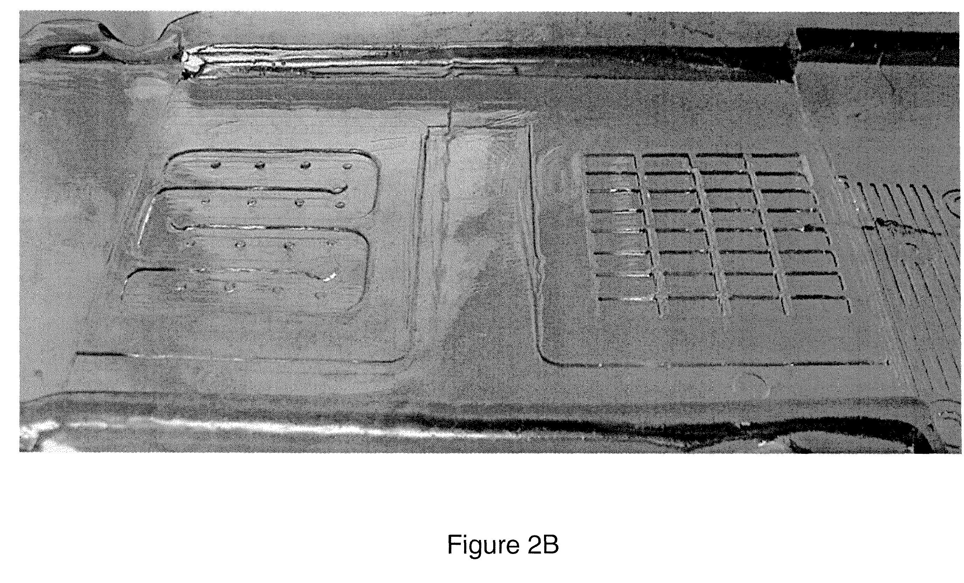

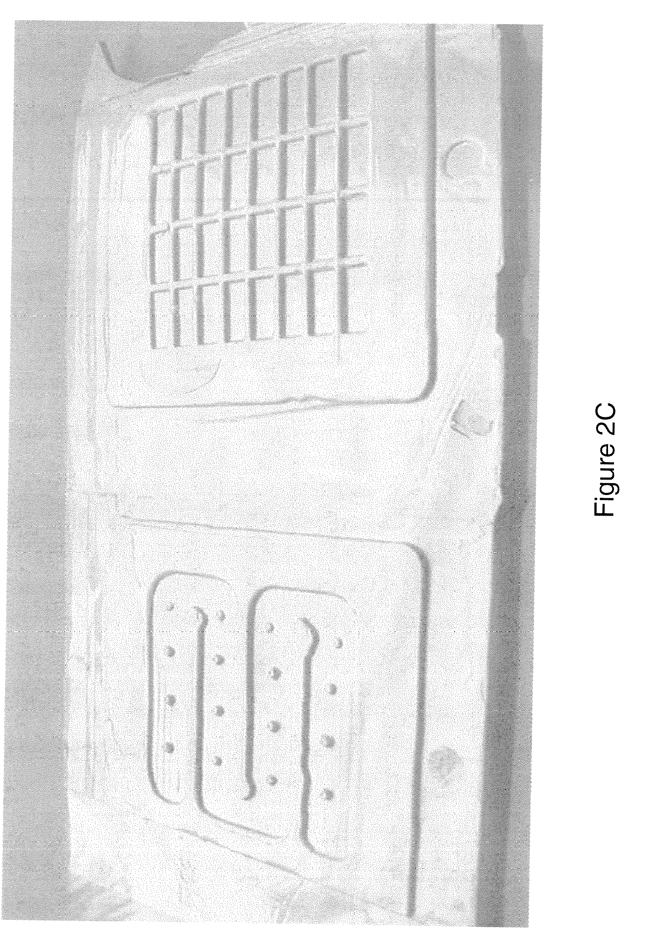

A glass melt with a composition equivalent to that of Example 12 reported in Table 1 was produced according to the process particulars described above. The melt, at a temperature of about 1500°C, was poured over a graphite mold, as illustrated in FIG. 2A. The graphite mold was pre-heated to about 600°C. Immediately thereafter, a metallic roller with a mass of about 100 kg was used to press the glass into the pre-heated mold, and to form a sheet with a flat surface on one side, and a pattern according to Fig. 2A on the other side. Following roller embossing, the glass was cooled to the glass transition temperature, immediately transferred into an annealing furnace, annealed at a temperature of 700 °C for about 1 hour and left to cool to room temperature in the furnace at a cooling rate of about 2 °C/min. A glass article exhibiting the microstructure features as illustrated in FIG. 2B was generated. This microstructured glass article was then subject to the ceramming process number 3, detailed above to form the microstructured glass-ceramic article illustrated in FIG. 2C. The article has different types of features as can be seen from Fig. 2C: (a) an array of 4 x 8 squares, about 1 mm deep and 4 mm x 10 mm large (right side of Fig. 2C); (b) a large wound channel, about 1 mm deep and 15 mm wide (left side of Fig. 2C); (c) the bottom of this large channel itself exhibits sharp lines with a height of about 0.1 mm and a width of about 0.1 mm (left side of Fig. 2C; from right to left) and (d) small circular features inside the large channel (left of Fig. 2C) that have a height of about 1.0 mm and a diameter of about 1.0 mm.

In order to quantify the amount of shrinkage which occurred during ceramming of the microstructured glass article of Example 13, a triangulation process was employed. The precursor glass article was marked on three points before ceramming with a diamond pen. The exact distances between those three points were measured. The marks remained on the microstructured glass-ceramic article following the ceramming cycle. Then, distances were measured once more, and the shrinkage was calculated for two distances, d1 and d2 (in mm):

**TABLE II**

| | before ceramming | after ceramming | % shrinkage |
|---|---|---|---|
| d1 | 142.2 | 140.9 | 0,9 |
| d2 | 59.8 | 59.3 | 0,8 |

From the data in Table II, it can be seen that shrinkage of the microstuctured glass during the crystallization process was less than 1 % and approximately equivalent in the two examined directions. The expert in the field will recognize that this indicates a high dimensional stability during the crystallization process. As can be seen from Fig. 2B and Fig. 2C, the geometry of the microstructures was maintained during the process of transforming the precursor glass into the glass ceramic. No warp exceeding the above noted requirement of a maximum of 20 % of the total thickness of the microstructured sheet was observed. Indeed, for a sheet thickness of about 2 mm, maximum warp was < 0.2 mm over a sample size of about 150 mm x 150 mm.

While specific embodiments of the invention have been described above, it will be appreciated that the invention may be practiced otherwise than as described.

The descriptions above are intended to be illustrative, not limiting. Thus, it will be apparent to one skilled in the art that modifications may be made to the invention as described without departing from the scope of the claims set out below.

## Claims

1. A glass-ceramic suitable for the fabrication of microstuctured articles containing cordierite as a predominant crystal phase said glass-ceramic comprising the following composition as calculated in weight percent on an oxide basis:
39-60% SiO₂, 15-35% Al₂O₃, with the SiO₂/Al₂O₃ ratio in weight being either between 1.31 to 1.40 or 1.54 to 2.86;
5-17% MgO, 4-12% TiO₂, 0-5% SnO, 0-4% MnO, 0-5% FeO, 0-X% CuO, 0-5% CeO₂, with the combination of MgO+SnO+MnO+FeO+CuO+CeO₂ being 14-25%;
0-4% BaO, 0-5% SrO, 0-5 ZnO, with the combination of CeO2+BaO+SrO+ SnO+ 2(MnO+CuO+FeO)+ZnO being 2-20% if the SiO₂/Al₂O₃ ratio is between 1.54 to 2.86 or 4-20% if the SiO₂/Al₂O₃ ratio is between 1.31 to 1.40;
the glass ceramic exhibiting a linear coefficient of thermal expansion (CTE) over the temperature range 0°-300°C of less than 50× 10⁻⁷ /° C and a thermal conductivity greater than about 2.5 W/(mK).

2. The glass-ceramic of claim 1, wherein said glass-ceramic has a CTE over the temperature range 0°-300°C of between 22-40×10⁻⁷ /° C.

3. The glass-ceramic of claim 1, wherein said glass-ceramic has a CTE over the temperature range 0°-300°C of less than about 15×10⁻⁷/°C.

4. The glass-ceramic of any one of claims 1 to 3, comprising the following composition, as calculated in weight percent on an oxide basis, of 39-57% SiO₂, 17-35% Al₂O₃, 5-15% MgO, 4-20% SnO, with the combination of MgO+SnO between 14-25% and 5-9% TiO₂.

5. The glass-ceramic according to any one of claims 1 to 4, further comprising 0-6% of 0.6 (K₂O+Na₂O).

6. The glass-ceramic according to any one of claims 1 to 5, further comprising at least one ingredient selected from the group consisting of up to 0-8% of Y₂O₃, Gd₂O₃, La₂O₃, and Ta₂O₅ in an amount not exceeding 8 weight percent.

7. The glass-ceramic according to any one of claims 1 to 6, wherein the glass-ceramic exhibits an elastic modulus of greater than 120 GPa.

8. A microstructured glass-ceramic article comprised of a glass-ceramic containing cordierite as a predominant crystal phase the glass-ceramic comprising the following composition as calculated in weight percent on an oxide basis:
39-60% SiO₂, 15-35% Al₂O₃, with the SiO₂/Al₂O₃ ratio in weight being either between 1.31 to 1.40 or 1.54 to 2.86;
5-17% MgO, 4-12% TiO₂, 0-5% SnO, 0-4% MnO, 0-5% FeO, 0-X% CuO, 0-5% CeO₂, with the combination of MgO+SnO+MnO+FeO+CuO+CeO₂ being 14-25%;
0-4% BaO, 0-5% SrO, 0-5 ZnO, with the combination of CeO2+BaO+SrO+ SnO+ 2(MnO+CuO+FeO)+ZnO being 2-20% if the SiO₂/Al₂O₃ ratio is between 1.54 to 2.86 or 4-20% if the SiO₂/Al₂O₃ ratio is between 1.31 to 1.40;
the glass ceramic exhibiting a linear coefficient of thermal expansion (CTE) over the temperature range 0°-300°C of less than 50×10⁻⁷ /° C and a thermal conductivity greater than about 2.5 W/(mK).

9. The microstructured glass-ceramic of claim 8, wherein said glass-ceramic article has a CTE over the temperature range 0°-300°C of between 22-40×10⁻⁷/° C.

10. The micro structured glass-ceramic article of claim 8, wherein said glass-ceramic article has a CTE over the temperature range 0°-300°C of less than about 15 ×10⁻⁷/°C 12.

11. The microstructured glass-ceramic of any one of claims 8 to 10, comprising the following composition, as calculated in weight percent on an oxide basis, of 39-57% SiO₂, 17-35% Al₂O₃, 5-15% MgO, 4-20% SnO, with the combination of MgO+SnO between 14-25% and 5-9% TiO₂.

12. The microstructured glass-ceramic article according to any one of claims 8 to 11, further comprising 0-6% of 0.6 (K₂O+Na₂O).

13. The micro structured glass-ceramic article according to any one of claims 8 to 12, further comprising at least one ingredient selected from the group consisting of Y₂O₃, Gd₂O₃, La₂O₃ and Ta₂O₅ in an amount not exceeding 8 weight percent.

14. The microstructured glass-ceramic article according to any one of claims 8 to 13, wherein the glass-ceramic article exhibits an elastic modulus of greater than 120 GPa.

15. The microstructured glass-ceramic article according to any one of claims 8 to 14, wherein the microstructures are formed in at least one surface of the glass-ceramic article and possess a maximal depth of about 3 mm.

16. The microstructured glass-ceramic article according to any one of claims 8 to 15,
wherein said microstructures include channels exhibiting a width between about 0.2 mm and 20.0 mm, and a depth between about 0.1 mm and 3.0 mm.

17. The microstructured glass-ceramic article according to claim 15, wherein the angle between article bottom and walls of said channels is between 80° and 100°.

18. The micro structured glass-ceramic article according to claim 15 or 17, wherein the channels exhibit a bent or circular shape.

19. The microstructured glass-ceramic article according to any one of claims 8 to 18, wherein article includes a plurality of disconnected channels.
